Europäisches Patentamt

European Patent Office

Office européen des brevets

Publication number: **0 119 887**
**A1**

# EUROPEAN PATENT APPLICATION

Application number: **84400307.9**

Date of filing: **15.02.84**

Int. Cl.³: **F 04 C 27/00, F 01 C 19/12**

Priority: **22.02.83 US 468092**

Date of publication of application: **26.09.84**
**Bulletin 84/39**

Designated Contracting States: **DE FR GB IT SE**

Applicant: **THE BENDIX CORPORATION, Executive Offices Bendix Center, Southfield Michigan 48037 (US)**

Inventor: **Deem, Brian Charles, 74 Maple Cliff, Avon Lake Ohio 44012 (US)**
Inventor: **Eslinger, Ralph Gilbert, 901 Cleveland Street, Elyria Ohio 44035 (US)**

Representative: **Huchet, André et al, Service Brevets Bendix 44, rue François 1er, F-75008 Paris (FR)**

### Seal assembly for closing a cavity, particularly in a rotary pump or compressor.

A seal assembly for closing a cavity between a rotor having an axial bore, a crankshaft extending through this bore and rotatable about an eccentric axis, and a stationary end member in which is journalled an end of said crankshaft.

The seal assembly (54) according to the invention comprises a disc (72) with a first resilient member (56) that engages the rotor surface (44) and a second eccentrically positioned resilient member (62) that engages a surface (65) on end member (38). Disc (72) which is attached to crankshaft (80) rotates with respect to both the rotor and end member to maintain a sealed cavity (55) even though the first and second resilient members (56 and 62) rotate on their respective sealing surfaces (44 and 65) with different revolutions per minute.

For use in rotary pumps or compressors.

## SEAL ASSEMBLY FOR CLOSING A CAVITY, PARTICULARLY
## IN A ROTARY PUMP OR COMPRESSOR

The present invention relates to a seal assembly for closing a cavity between a rotor, a stationary end plate and a crankshaft of a pump or compressor to retain lubricant in the cavity.

Rotary compressors such as disclosed in U.S. Patents Nos. 3 165 259, 3 415 444 and 4 058 321 disclose various prior art seal structures for retaining a lubricant in an operational cavity between a crankshaft and rotor member. In such compressors, the bearings for the crankshaft are sealed by a lip-ring type seal and a thrust type face seal used to seal the rotor and retain a lubricant in the crankcase cavity. Because of the rotational speed and oscillatory motion which are experienced by the crankshaft and rotor, after a period of use one or both of such seals often fail.

Since the crankshaft rotation is normally at a higher revolution per minute than the rotor, the bearing seals most often fail first ; however, the thrust type seals can twist and produce non-uniform contact which can produce a resulting leak after aperiod of use.

When such failure occurs, the lubricant either flows into the compression chamber or is communicated into the surrounding environment.

It is an object of the present invention to remedy these drawbacks of prior art constructions and to provide a rotor pump or compressor with a seal assembly which prolonges the operational life of the bearings that position the rotor in the cavity.

This object is achieved, according to the invention, thanks to a seal assembly designed for closing a cavity located between a rotor having an axial bore, a crankshaft extending through said axial bore and rotatable about an axis eccentric with respect thereto, and a stationary end member in which is journalled an end of said crankshaft, said seal assembly being characterized in that it comprises a disc mounted in an axial gap between the rotor and the stationary end member, said disc having an eccentric opening therein, a first flange surrounding the periphery of the disc and carrying a first resilient member which slidably engages the rotor, and a second flange surrounding said eccentric opening and carrying a second resilient member which slidably engages the stationary end member, said disc being further caused to rotate with the crankshaft. The seal assembly according to the invention thus includes a first seal cooperating with the rotor and a second seal cooperating with the stationary end member. Since the rotational speed of the rotor is normally less than that of the crankshaft, it results that the rotor seal rotates at a fractional ratio of the crankshaft rotation, i.e. 1:2, 2:3, 3:4, etc. Since the centrifugal forces acting on the rotor seal are directly proportional to the rotational speed squared, it is evident that centrifugal loading of the rotor seal is reduced resulting in more effective sealing. A further advantageous effect of this invention is achieved since both the crankshaft and rotor bearing are connected to the sealed cavity through a single sealing arrangement.

In a preferred embodiment of the invention, the rotor is formed at its end adjacent to the disc with an annular surface and the first resilient member slidably engages said annular surface. Likewise, the stationary end member is formed with an annular surface and the second resilient member slidably engages this annular surface. Each of the flanges of the disc advantageously includes an inwardly projecting lip which defines with the body of the flange a groove to substantially fix the position of the associated resilient member with respect to the disc. The seal assembly can further include first and second thrust rings interposed between the first flange and the rotor and between the second flange and the stationary end member, respectively, to substantially fix the axial position of the disc in the gap between the rotor and stationary end member.

These and other advantageous features of the invention will become readily apparent from reading the following description of a preferred embodiment, given by way of example only and with reference to the accompanying drawings, in which :

- Figure 1 is a side view of a compressor with a sectional view of a seal made according to the principles of this invention ;

- Figure 2 is an end view of the seal of Figure 1 ;

- Figure 3 is a sectional view of the seal of Figure 2 ;

- Figure 4 is a sectional view taken along line 4-4 of Figure 1 ; and

- Figure 5 is a sectional view of another embodiment of a sealing structure made according to this invention.

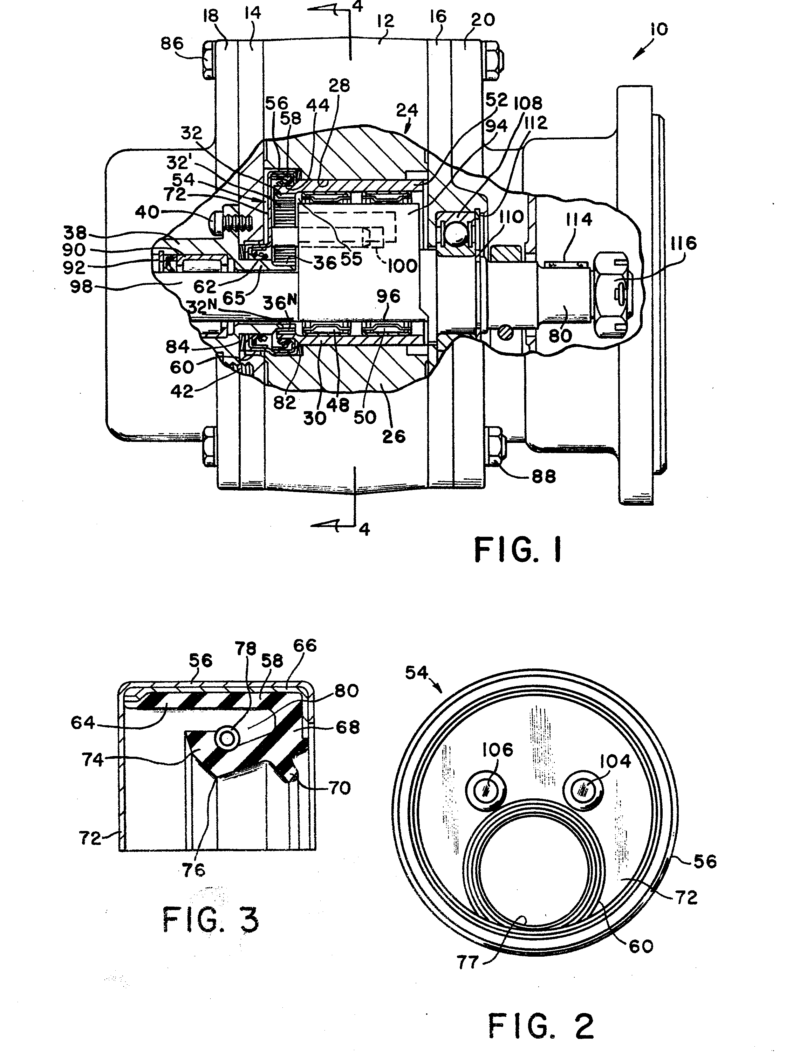

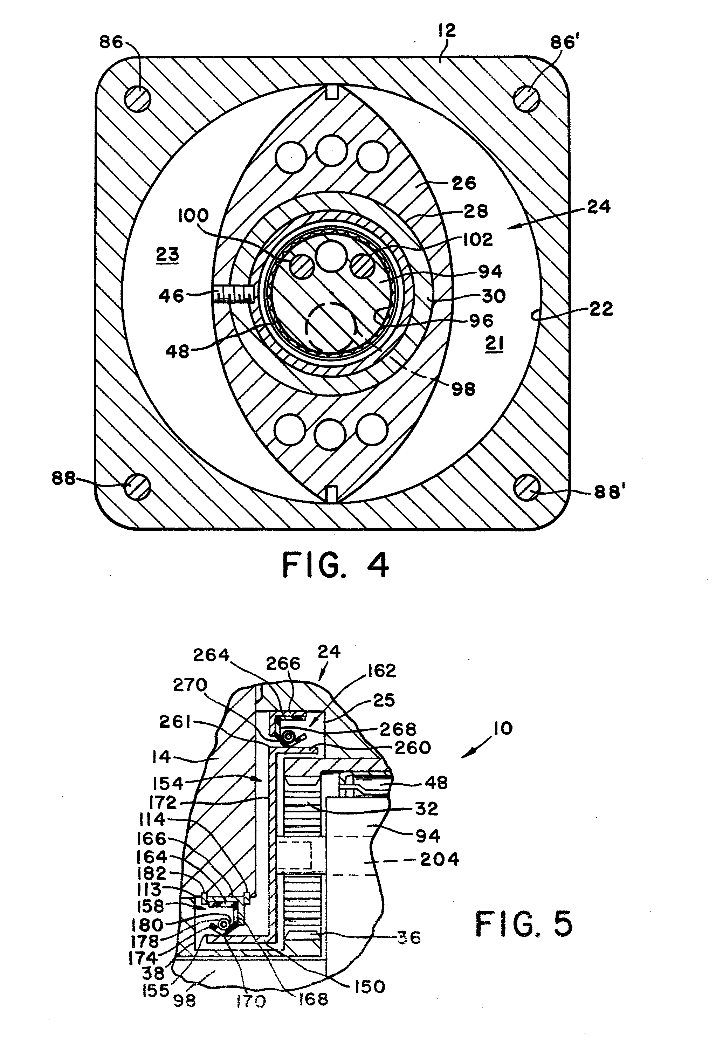

The pump or compressor 10 shown in Figure 1 has a central housing 12 which is attached to bearing plates 14 and 16 and end caps 18 and 20. As best shown in Figure 4, the center housing 12 has an axial bore 22 located therein for receiving a rotor assembly 24. The rotor assembly 24 has an elliptical body 26 with a cylindrical axial opening or bore 28. A sleeve 30 having a series of teeth 32, 32'... $32^N$ on one end thereof is inserted into the axial opening 28. The teeth 32, 32'...$32^N$ form a ring gear which engage corresponding teeth 36, 36' ...$36^N$ on a pinion formed on a bearing retainer 38 which is fixed to end plate 14 by fasteners 40 and 42. Sleeve 30 which has an annular surface 44 located adjacent its end, is fixed in the axial opening by set screw 46 that extends through the elliptical body 26. A needle bearing 48 is press fit in sleeve 30 adjacent its first end while a needle bearing 50 is press fit in sleeve 30 adjacent its second end 52.

A seal assembly 54 attached to crankshaft 80 has a disc 72 with a first flange 56 that retains a first resilient member 58 and a second flange 60 that retains a second resilient member 62. The first resilient member 58 engages surface 44 on sleeve 30 while the second resilient member 62 engages surface 65 on bearing retainer 38.

With the exception in size, both the first and second resilient members 58 and 62 of the seal assembly 54 are identical, therefore, only resilient member 58 shown in Figure 3 will be described in detail.

Resilient member 58 has a cylindrical body 64 that is molded onto a ring 66. A rib 68 that extends from the cylindrical body 64 has an annular seat 70 that engages surface 44 to effect a seal between the sleeve 30 and disc shaped body 72. An annular flap 74 which extends from rib 68 has an annular projection 76 that engages surface 44 to establish an additional seal therewith. A coil spring 78 located in groove 80 acts on the annular flap 74 to provide a continual force that urges projection 76 into engagement with surface 44. A first thrust ring 82 located on surface 44 and a second thrust ring 84 located on surface 65 engage seal 54. When bearing retainer 38 is fixed to end plate 14 and housing bolts 86 and 88 tightened to join end caps 18 and 20, plates 14 and 16 and housing 12 together, thrust rings 82 and 84 act on seal 54 to assure that surfaces 70 and 76 on resilient members 58 and 62 are held in a position whereby a seal occurs.

As best shown in Figure 2, an opening 77 in disc 72 associated with the second resilient member 62 is offset or eccentric to the center of disc 72. The offset or throw is equal to the throw of the crankshaft 80.

Crankshaft 80 has a first section 98 that is retained in a bearing 90 located in retainer 38. A seal and snap ring 92 engage retainer 38 to hold the bearing 90 in the retainer 38. The throw section 94 of the crankshaft has a periphery surface 96 that engages bearings 48 and 50 and openings 100 and 102 for receiving drive keys 104 and 106 which extend from disc 72 of seal assembly 54.

A bearing 108 is attached to a third section of the crankshaft 80 by a snap ring 110 and is attached to end plate 16 by a snap ring 112. The crankshaft 80 has a key way (not shown) into which a key 114 is inserted for fixing a sheave (not shown) to the crankshaft 80. A nut 116 holds the sheave in place in order that an input can be provided to rotate the crankshaft 80.

When an input is supplied to the crankshaft 80 of pump or compressor 10, the crankshaft is rotated about its axis on bearings 90 and 108. Rotation of the crankshaft 80 causes throw section 94 to supply a corresponding rotary input to the elliptical body 26. The elliptical body rotates in bore 22 to move fluid through the chambers 21 and 23 formed therein.

Seal assembly 54 is floating and independent of the elliptical body or rotor 26 and crankshaft 80. While seal assembly 54 turns with crankshaft 80 through the engagement of drive keys 104 and 106, it is only responsive to the relationship of teeth on ring gear 32 and pinion 36 and the eccentricity of the crankshaft 80. The contact of the teeth on ring gear 32 and pinion 36 remains at a fixed dimension since the seal 54 has the same dimensional eccentricity as crankshaft 80. Therefore seal 54 turns on surface 44 of sleeve 30 at a first revolution per minute and on surface 65 on bearing retainer 38 at a second revolution per minute as it follows the pinion 36 around the ring gear 32 to maintain a sealed cavity even with different revolutions occuring on the first and second resilient surfaces 56 and 62.

While thrust rings 82 and 84 do engage the flanges 56 and 60, they are selected so as to exert a minimum of frictional resistance to the movement of seal assembly 54.

Since seal assembly 54 closes the cavity 55 defined by seal 54 and throw 94 on crankshaft 80, lubricant contained in cavity 55 is transferred between bearings 48 and 50 and end bearing 90 as ring gear 32 moves around pinion 36. Thus, the floating seal assembly 54 compensates for the oscillating motion and speed differentials of the crankshaft and rotor to assure long life for the pump or compressor 10 without a bearing failure.

In the sectional view of the embodiment of pump or compressor 10 shown in Figure 5, where the parts are identical with the parts in Figure 1 the same reference numerals are used.

The seal assembly 154 includes a first resilient member 158, a disc 172 and a second resilient member 162.

The first resilient member 158 has a cylindrical body 164 that is molded onto a ring 166. A rib 168 extending from cylindrical body 164 has an annular seat 170 that engages surface 155 on flange 150 of disc 172 to effect a seal between housing 14 and disc 172. In addition, an annular flap 174 which extends from rib 168 defines a groove 180 in which a coil spring 178 is located to provide a constant force that urges seat 170 into engagement with surface 155. The first resilient member 158 is press fit in an opening 113 in end plate 14 until ring 166 engages a shoulder 114. A snap ring 182 acts on ring 166 to assure that the first resilient member 158 is retained in a substantially fixed position in opening 113.

The second resilient member 162 which press fits into an annular groove 25 on rotor 24 and is substantially identical with the first resilient member 158, has a cylindrical body 264 that is molded onto a ring 266. A rib 268 which extends from cylindrical body 264 has an annular seat 270 that engages surface 261 on flange 260 of disc 172 to effect a seal betwen rotor 24 and disc 172. Here again, a coil spring located in a groove acts on the annular seat 270 to provide a constant force that urges seat 270 into engagement with surface 261.

The disc 172 is connected to throw 94 by drive keys 204, only one of which is shown. The drive keys 204 are designed such that some clearance is assured between disc 172 and housing 14, rotor 24 and ring 166 to avoid frictional engagement that could cause deterioration.

During the operation of a pump or compressor 10 equipped with the seal assembly 154 shown in Figure 5, the first resilient member 158 remains stationary while the second resilient member 162 rotates with the rotor 24 which is one-half the rotational speed of the crankshaft 80. Centrifugal forces acting on the first and second resilient members 158 and 162 are directly proportional to the rotational speed squared. Since the first resilient member 158 remains stationary, centrifugal loading is substantially eliminated and thus a potential leak path for lubricant is greatly reduced.

CLAIMS

1. A seal assembly (54) for closing a cavity located between a rotor (24) having an axial bore (28), a crankshaft (80) extending through said axial bore and rotatable about an axis eccentric with respect thereto, and a stationary end member (14, 38) in which is journalled an end of said crankshaft, characterized in that it comprises a disc (72) mounted in an axial gap between the rotor (24) and the stationary end member (14, 38), said disc having an eccentric opening (77) therein, a first flange (56) surrounding the periphery of the disc and carrying a first resilient member (58) which slidably engages the rotor (24, 30), and a second flange (60) surrounding said eccentric opening (77) and carrying a second resilient member (62) which slidably engages the stationary end member (14, 38), said disc (72) being further caused to rotate with the crankshaft (80).

2. A seal assembly according to claim 1, characterized in that the rotor (24, 30) is formed at its end adjacent to the disc (72) with an annular surface (44) and the first resilient member (58) slidably engages said annular surface.

3. A seal assembly according to claim 1 or 2, characterized in that the stationary end member (14, 38) is formed with an annular surface (65) and the second resilient member (62) slidably engages said annular surface.

4. A seal assembly according to any of claims 1 to 3, characterized in that the first (56) and/or second (60) flange includes an inwardly projecting lip which defines with the body of the flange a groove to substantially fix the position of the associated resilient member (58, 62) with respect to the disc (72).

5. A seal assembly according to any of claims 1 to 4, characterized in that it further includes first (82) and second (84) thrust rings interposed between said first flange (56) and the rotor (24, 30) and between said second flange (60) and the stationary end member (14, 38), respectively, to substantially fix the axial position of the disc (72) in the gap between the rotor and stationary end member.

6. A seal assembly according to any of claims 2 to 5, characterized in that the first (58) and/or second (62) resilient member includes a cylindrical body (64) with a rib (68) extending therefrom, said rib having an annular seat (70) for engaging the associated annular surface of the rotor or stationary end member while permitting limited eccentricity with respect thereto.

7. A seal assembly according to claim 6, characterized in that the resilient member further includes an annular flap (74) which extends from said rib (68) and has an annular projection (76) for also engaging the associated annular surface of the rotor or stationary end member, said flap being surrounded by a biasing spring (78) which urges said annular projection toward said annular surface.

0119887

1 / 2

FIG. I

FIG. 3

FIG. 2

0119887

FIG. 4

FIG. 5

0119887

European Patent Office

**EUROPEAN SEARCH REPORT**

Application number

EP 84400307.9

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| X | DE - B2 - 2 052 623 (AUDI NSU AUTO UNION AG) <br> * Totality * | 1-3 | F 04 C 27/00 <br> F 01 C 19/12 |
| Y | * Fig. 1,6 * | 4-7 | |
| Y | DE - B2 - 2 362 980 (TOYOTA) <br> * Column 3, line 35 - column 4, line 23; fig. 1 * | 4,5,7 | |
| Y | US - A - 3 495 843 (ANDERSEN) <br> * Totality * | 4,6,7 | |
| Y | DE - B2 - 2 347 621 (NISSAN MOTOR CO) <br> * Fig. 2 * | 5 | |
| A | DE - B2 - 1 751 032 (AUDI NSU AUTO UNION) <br> * Totality, especially fig.2 * | 1 | **TECHNICAL FIELDS SEARCHED (Int. Cl. ³)** <br><br> F 04 C 2/00 <br> F 04 C 18/00 <br> F 01 C 19/00 <br> F 16 J 15/00 <br> F 04 C 27/00 |
| A,D | US - A - 4 058 321 (GAVRUN) | | |
| A,D | US - A - 3 415 444 (FRENZEL) | | |
| A,D | US - A - 3 165 259 (MÜLLER) | | |

The present search report has been drawn up for all claims

| Place of search | Date of completion of the search | Examiner |
|---|---|---|
| VIENNA | 20-06-1984 | WITTMANN |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82